Europäisches Patentamt

European Patent Office

Office européen des brevets

(11) Numéro de publication: **0 225 242**
**A1**

(12) **DEMANDE DE BREVET EUROPEEN**

(21) Numéro de dépôt: **86402521.8**

(22) Date de dépôt: **13.11.86**

(51) Int. Cl.⁴: **B 60 Q 1/30**

(30) Priorité: **15.11.85 FR 8516926**

(43) Date de publication de la demande:
**10.06.87 Bulletin 87/24**

(84) Etats contractants désignés: **DE ES**

(71) Demandeur: **CIBIE PROJECTEURS**
**17, rue Henri Gautier**
**F-93012 Bobigny Cédex (FR)**

(72) Inventeur: **Dilouya, Gilbert**
**8, quai de la Marne**
**F-75019 Paris (FR)**

(74) Mandataire: **Martin, Jean-Jacques et al**
**Cabinet REGIMBEAU 26, Avenue Kléber**
**F-75116 Paris (FR)**

(54) **Glace de fermeture à fonction catadioptrique pour feu de signalisation de véhicule.**

(57) L'invention concerne une glace de fermeture de feu ou bloc de feux de signalisation de véhicule tel qu'automobile.

Selon l'invention, la glace (40) comporte des bandes horizontales alternées à fonction catadioptrique (42) et transparentes (44), respectivement les bandes à fonction catadioptrique étant constituées par des aiguilles catadioptriques élémentaires (48, 48′) de section transversale rectangulaire obtenues par troncation, selon deux plans horizontaux parallèles, d'aiguilles catadioptriques à trois facettes, de section transversale hexagonale et d'axe horizontal, ayant une de leurs arêtes orientée dans un plan vertical. Afin de satisfaire à certaines règlementations, notamment lorsque le rayonnement incident fait un angle horizontal avec l'axe de référence de la fonction catadioptrique, au moins certaines des aiguilles catadioptriques ont leur axe (46, 46′) incliné latéralement de part et d'autre dudit axe de référence.

FIG-4

EP 0 225 242 A1

## Description

"Glace de fermeture à fonction catadioptrique pour feu de signalisation de véhicule"

La présente invention a trait d'une façon générale à la signalisation catadioptrique pour véhicules, notamment pour véhicules automobiles, et concerne plus particulièrement une glace de fermeture pour feu de signalisation de véhicule ayant une fonction catadioptrique sous la forme d'éléments catadioptriques en forme générale de bande.

Dans les feux de signalisation de véhicules, et en particulier dans les blocs de feux arrière, il est maintenant conventionnel d'associer des éléments catadioptriques à la glace de fermeture, et d'organiser ces éléments catadioptriques en bandes sensiblement horizontales. Entre ces bandes catadioptriques sont laissées des bandes transparentes, par exemple des bandes à faces parallèles, qui permettent le passage vers l'extérieur des fonctions lumineuses classiques telles que feux de position et feux stop. Un premier avantage de cette disposition est le fait que l'on combine sur une même surface du véhicule les fonctions lumineuses habituelles et la fonction de rétro-réflexion catadioptrique. Un autre avantage de ce type d'agencement est plutôt lié à des considérations esthétiques, du fait que la ligne du véhicule tel qu'observé de l'arrière est de cette manière sensiblement affinée.

Les bandes catadioptriques de la technique antérieure telles qu'envisagées ci-dessus sont constituées par des aiguilles à trois faces perpendiculaires entre elles, formant un trièdre rectangle, dont la section transversale est hexagonale.

Un inconvénient de cette forme de section transversale est le fait que, quelle que soit la façon dont les aiguilles sont juxtaposées, il n'est pas possible de donner à la bande catadioptrique un contour parfaitement rectangulaire. Ceci est désavantageux tant d'un point de vue esthétique que d'un point de vue de la facilité et du coût de fabrication.

La présente invention vise à pallier les inconvénients de la technique antérieure et à proposer un nouvel agencement catadioptrique sur une glace de fermeture de feu(x) de signalisation, qui soit plus facile et moins onéreux à réaliser, tout en conservant les caractéristiques photométriques telles qu'exigées par les règlements.

En particulier, l'invention vise à proposer une glace de fermeture de feu de signalisation ayant une fonction catadioptre constituée par une pluralité de bandes parallèles dont les frontières soient rigoureusement rectilignes, sans pour autant que la modification inhérente des aiguilles catadioptriques ne compromette les caractéristiques photométriques de la fonction catadioptre.

A cet effet, la présente invention concerne une glace de fermeture pour feu ou bloc de feux de signalisation de véhicule, du type comportant des bandes horizontales alternées à fonction catadioptrique et transparentes, respectivement, caractérisée en ce que les bandes à fonction catadioptrique sont constituées par des aiguilles catadioptriques élémentaires de section transversale sensiblement rectangulaire obtenues par troncation, selon deux plans horizontaux parallèles, d'aiguilles catadioptriques à trois facettes, de section transversale hexagonale et d'axe horizontal, ayant une de leurs arêtes orientée dans un plan vertical, et en ce qu'au moins certaines des aiguilles catadioptriques ont leur axe incliné latéralement de part et d'autre de l'axe de référence de la fonction catadioptrique.

De façon préférée, chaque bande à fonction catadioptrique est constituée par une succession horizontale de deux aiguilles catadioptriques élémentaires superposées verticalement et orientées tête-bêche.

En outre, l'angle d'inclinaison des axes des aiguilles catadioptriques élémentaires de part et d'autre de l'axe de référence sera avantageusement compris entre 3° et 5°.

D'autres caractéristiques et avantages de la présente invention apparaîtront mieux à la lecture de la description détaillée suivante de modes de réalisation préférés de celle-ci, donnée à titre d'exemple non limitatif et faite en référence au dessin annexé, sur lequel :

- la figure 1 est une vue de face explicitant l'obtention d'aiguilles catadioptriques élémentaires utilisées dans la présente invention.

- la figure 2 est une vue de face d'un premier type d'agencement catadioptrique selon l'invention,

- la figure 3 est une vue de face d'un second type d'agencement catadioptrique selon l'invention, et

- la figure 4 est une vue en perspective de dessus d'une partie d'une glace de fermeture d'un bloc de feux de signalisation de véhicule automobile mettant en oeuvre les dispositions de l'invention.

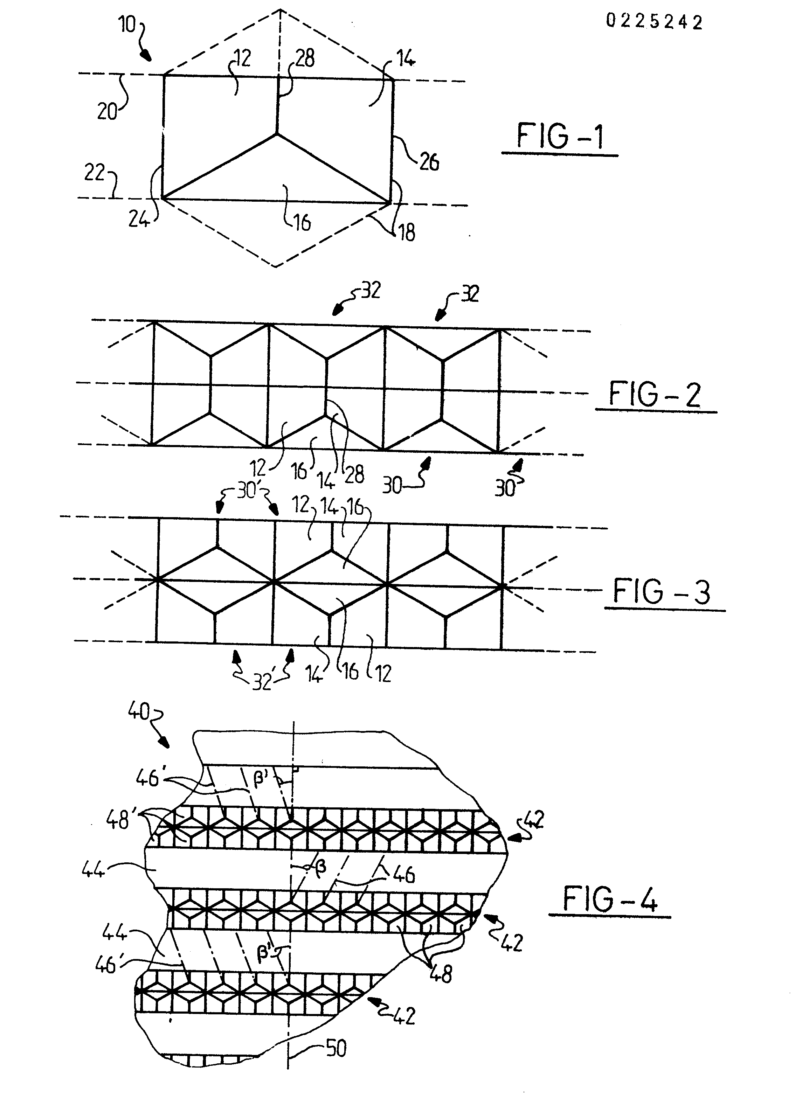

En référence au dessin, on a représenté sur la figure 1, en vue de face, une aiguille catadioptrique 10 comportant de façon conventionnelle trois facettes d'extrémité 12, 14 et 16 perpendiculaires entre elles. Comme le montre la figure 1, une telle aiguille présente normalement une section transversale hexagonale (contour 18 partiellement en traits pointillés). La disposition des trois faces 12, 14 et 16 selon un trièdre rectangle permet, de façon bien connue, de renvoyer tous les rayons lumineux incidents dans une direction substantiellement parallèle à leur angle d'incidence. Un ensemble de telles aiguilles catadioptriques est utilisé comme élément de rétro-réflexion à des fins de signalisation des véhicules.

Selon l'invention, on réalise une aiguille catadioptrique élémentaire en tronquant l'aiguille à section hexagonale ci-dessus selon deux plans horizontaux, symbolisés sur la figure 1 par les lignes horizontales 20 et 22, qui passent respectivement par les extrémités supérieures et inférieures des deux bords latéraux verticaux 24, 26 de l'aiguille. On peut noter que ces deux plans 20, 22 sont perpendiculaires à un plan vertical dans lequel est incluse l'une des arêtes de l'aiguille, à savoir l'arête 28 définie par les facettes 12 et 14. On obtient ainsi une aiguille catadioptrique dont la section transversale (contour en traits pleins) est rectangulaire, avec une arête s'étendant verticalement dans son plan médian.

On comprend que des aiguilles ayant une telle section transversale vont pouvoir être juxtaposées à souhait en lignes et en colonnes de manière à former des bandes plus ou moins larges dont les contours pourront être rigoureusement rectilignes. Ainsi, sur les figures 2 et 3 sont représentées des bandes catadioptriques qui sont obtenues en alignant latéralement des ensembles élémentaires constitués par deux aiguilles catadioptriques 30, 32 du type décrit ci-dessus, superposées et orientées en tête-bêche. Sur la figure 2, l'aiguille inférieure 30 a la même orientation que celle de la figure 1, et l'aiguille 32 qui lui est est superposée a été retournée de 180° autour d'un axe horizontal.

Inversement, sur la figure 3, c'est l'aiguille supérieure 30' qui est orientée comme à la figure 1, et l'aiguille 32' qui est au dessous qui a été retournée de 180° autour d'un axe horizontal.

Bien entendu, la disposition géométrique mutuelle des aiguilles catadioptriques élémentaires n'est nullement limitée à celles qui sont indiquées ci-dessus, et pourra être tour à fait quelconque. Cependant, l'avantage des dispositions du genre représenté sur les figures 2 et 3 est que l'on ne créé pas de discontinuité de surface entre les aiguilles adjacentes, au profit du rendement lumineux de la rétro-réflexion.

On a cependant constaté, au cours d'essais avec des catadioptres constitués d'un ensemble d'aiguilles catadioptriques élémentaires telles que décrites plus haut et orientées, de la façon conventionnelle, perpendiculairement au plan du catadioptre, que certaines caractéristiques de photométrie telles qu'exigées par les règlements n'étaient pas toujours respectées. Ceci peut s'expliquer par le fait que les facettes réfléchissantes d'une aiguille catadioptrique élémentaire de l'invention ne présentent plus une symétrie d'ordre 3 autour de l'axe longitudinal de ladite aiguille. Ainsi, l'on comprend qu'il existe certaines régions des facettes réfléchissantes qui, bien qu'elles soient normalement exposées au rayonnement incident, ne participent pas à la rétro-réflexion catadioptrique car les rayons réfléchis par ces régions ne pourront pas rencontrer les deux autres facettes pour être à nouveau réfléchis par ces dernières dans la direction du rayonnement incident. On peut en déduire que le rendement lumineux va sensiblement varier en fonction de l'angle d'incidence, et l'intensité du rayonnement réfléchi va être réduite pour certaines gammes de valeurs de cet angle.

A cet égard, une disposition des règlements européens en matière de signalisation lumineuse des véhicules automobiles prévoit que le rendement lumineux, dans la direction de réflexion normale et également pour de faibles écarts angulaires (de l'ordre de 1°) autour de cette direction, doit être supérieur à des valeurs limites données. Ceci est destiné en particulier à ce qu'un observateur puisse percevoir les rayons réfléchis par le catadioptre même s'il est situé à une certaine distance dans un plan vertical par rapport à la source d'éclairement, ce qui représente la majorité des cas.

Ceci doit s'appliquer en particulier pour un éclairement avec un angle horizontal de ± 20° par rapport à l'axe de référence (c'est-à-dire l'axe perpendiculaire au plan du catadioptre).

Ainsi, pour les raison indiquées plus haut, il apparaît que les catadioptres constitués d'aiguilles catadioptriques tronquées et orientées comme décrit plus haut satisfont difficilement à certaines exigences en matière de rendement lumineux pour des angles d'incidence et des angles de divergence (c'est-à-dire des angles entre la direction d'éclairement et la direction d'observation) donnés.

Selon la présente invention, pour pallier ce défaut des aiguilles catadioptriques tronquées telles que décrites plus haut, on prévoit que les axes des aiguilles catadioptriques d'une même bande sont inclinés dans un plan horizontal par rapport à l'axe de référence du catadioptre.

En référence à la figure 4, qui représente en vue en perspective de dessus la glace de fermeture d'un bloc de feux auquel est appliquée la présente invention, la glace 40 est constituée par des régions catadioptriques en forme de bandes horizontales parallèles 42, réalisées par exemple conformément à la disposition de la figure 2 ou de la figure 3, qui sont séparées par des régions transparentes 44, également en forme de bandes. Ces bandes transparentes 44 sont destinées au passage des fonctions lumineuses conventionnelles du feu. On peut ainsi réaliser des feux ou blocs de feux de signalisation de véhicules, notamment automobiles, dans lesquels sont cumulées dans une même surface les fonctions lumineuses classiques et la fonction rétro-réfléchissante d'un catadioptre.

Dans le présent mode de réalisation, les axes des aiguilles catadioptriques tronquées d'une même bande sont inclinées latéralement par rapport à l'axe de référence du catadioptre, dans un plan horizontal passant par la bande. En outre, ces inclinai sons sont inversées alternativement d'une bande à l'autre.

De préférence, l'angle d'inclinaison des aiguilles est de l'ordre de 3 à 5° latéralement de part et d'autre de l'axe de référence. Pour mieux illustrer ces inclinaisons, on a représenté sur la figure 4 les axes respectifs 46 et 46' d'un certain nombre d'aiguilles catadioptriques élémentaires 48 et 48', inclinés respectivement dans deux directions symétriques par rapport à la direction (ligne 50) de l'axe de référence de chaque bande, tout en restant dans un plan horizontal. Les angles d'inclinaison sont respectivement indiqués en β et β', et ont été volontairement exagérés sur la figure à de fins de clarté.

Une telle disposition présente l'avantage de respecter les valeurs minimales requises par les règlements en matière d'intensité lumineuse, notamment dans une configuration d'éclairement du catadioptre avec un écart angulaire dans un plan horizontal par rapport à son axe de référence.

On peut noter à cet égard qu'en choisissant un angle de 3 à 5° tel qu'indiqué plus haut, les caractéristiques photométriques en observation avec angle d'incidence nul ou variant dans un plan vertical ne sont sensiblement pas altérées.

Bien entendu, la présente invention ne se limite pas à la forme de réalisation décrite, mais inclut dans son cadre toute variante ou modification que pourra y apporter l'homme de l'art.

En particulier, les bandes catadioptriques pourront être agencées, tant en ce qui concerne la disposition des aiguilles que l'orientation de leurs axes, de manières tout à fait inverses, tant que les principes généraux de l'invention sont respectés.

**Revendications**

1.- Glace de fermeture pour feu ou bloc de feux de signalisation de véhicule, du type comportant des bandes horizontales alternées (42, 44) à fonction catadioptrique et transparentes, respectivement, caractérisée en ce que les bandes à fonction catadioptrique sont constituées par des aiguilles catadioptrique élémentaires (30, 32 ; 30', 32') de section transversale sensiblement rectangulaire obtenues par troncation, selon deux plans horizontaux parallèles (20, 22) d'aiguilles catadioptriques à trois facettes, de section transversale hexagonale et d'axe horizontal, ayant une de leurs arêtes (28) orientée dans un plan vertical, et en ce qu'au moins certaines des aiguilles catadioptriques ont leur axe (46, 46') incliné latéralement de part et d'autre de l'axe de référence de la fonction catadioptrique.

2.- Glace de fermeture selon la revendication 1, caractérisée en ce que les deux plans de troncation (20, 22) passent par les arêtes qui délimitent les faces latérales (24, 26) des aiguilles de section transversale hexagonale.

3.- Glace de fermeture selon l'une quelconque des revendications 1 et 2, caractérisée en ce que chaque bande à fonction catadioptrique est constituée par une succession horizontale de deux aiguilles catadioptriques élémentaires (30, 32 ; 30', 32') superposées verticalement et orientées tête-bêche.

4.- Glace selon l'une quelconque des revendications 1 à 3, caractérisée en ce que l'angle (β, β') d'inclinaison des axes des aiguilles catadioptriques élémentaires de part et d'autre de l'axe de référence est compris entre 3° et 5°.

5.- Feu de signalisation pour véhicule automobile, caractérisé en ce qu'il comporte une glace de fermeture selon l'une quelconque des revendications 1 à 4.

6.- Bloc de feux de signalisation pour véhicule, caractérisé en ce qu'il comporte une glace de fermeture selon l'une quelconque des revendications 1 à 4.

0225242

FIG-1

FIG-2

FIG-3

FIG-4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 119 992  (JOHNSON)<br>* Figures 1-8 * | 1 | B 60 Q   1/30 |
| A | US-A-1 874 138  (STIMSON)<br>* Figures 1-10 * | 1 | |
| A | US-A-3 541 606  (HEENAN)<br>* Résumé; figures 4-6 * | 1 | |
| A | DE-C-1 123 928  (METALL INDUSTRIE K.G. HUECK)<br>* Figures 1,2 * | 1 | |

-----

| | | DOMAINES TECHNIQUES RECHERCHES (Int. Cl.4) |
|---|---|---|
| | | B 60 Q<br>F 21 M<br>F 21 V |

Le présent rapport de recherche a été établi pour toutes les revendications

| Lieu de la recherche | Date d'achèvement de la recherche | Examinateur |
|---|---|---|
| LA HAYE | 11-02-1987 | ONILLON C.G.A. |